(19) Europäisches Patentamt

European Patent Office

Office européen des brevets

(11) EP 0 767 439 A2

(12) EUROPEAN PATENT APPLICATION

(43) Date of publication:
09.04.1997 Bulletin 1997/15

(51) Int Cl.$^6$: G06F 19/00

(21) Application number: 96307252.5

(22) Date of filing: 04.10.1996

(84) Designated Contracting States:
AT BE CH DE DK ES FI FR GB GR IE IT LI LU MC NL PT SE

(30) Priority: 04.10.1995 GB 9520287

(71) Applicants:
• University of Wales College of Medicine
  Cardiff CF4 4XN (GB)
• UGCS Limited
  Pontypridd, Mid Glamorgan CF37 1DL (GB)

(72) Inventors:
• Gough, Nigel A.J. UWCM,
  Cardiff, CF4 4XW (GB)
• Wahab, Mohamed A., Dr.
  University of Glamorgan,
  Mid Glamorgan, CF37 1DL (GB)

(74) Representative: Gibson, Stewart Harry
  URQUHART-DYKES & LORD,
  Three Trinity Court,
  21-27 Newport Road
  Cardiff CF2 1AA (GB)

(54) **Signal classification method**

(57) A method of classifying signals, and apparatus for performing the method, in which the method comprises the steps of reducing the dimensionality of an input data set Y by considering the variation in value of that data at particular intervals (1), and classifying the input data set Y by means of the reduced dimensionality data set D thus obtained (2).

$$h_i = |y_i - y_{i+r}|$$

Figure 2a

EP 0 767 439 A2

## Description

This invention relates to a method of and system for signal classification, particularly but not solely using neural networks.

There are many applications in which the classification of complex signals is either necessary or desirable. One application, for example, relates to the identification and classification of faulty d.c. motors by means of an analysis of their respective current waveforms. Such waveforms are typically analysed using one of a number of signal-processing and/or statistical methods. However, such methods have often been shown to be inaccurate or unreliable.

Neural network-based classification techniques have also been proposed. However, in order to classify very complex signals using existing techniques, a large number of signal samples must be presented at the input of the network. This may necessitate the use of highly complex networks which are poor at learning and recall.

In order to overcome this limitation, some form of data compression is desirable. Unfortunately, a direct reduction in the size of the signal sample vector may result in the loss of certain vital signal information, thereby preventing the network from converging or reducing its classification performance.

We have now devised a signal classification method and system which overcome the problems outlined above.

According to the present invention, there is provided a method of classifying signals, comprising:

(a) selecting a 'ruler' length and progressively mapping said ruler onto an input signal to be classified, and determining each resulting change in value of said input signal, or the product of each corresponding pair of values of said input signal;
(b) summing the values or products obtained at step (a) in order to obtain a single summation value representing the input signal at the selected 'ruler' length;
(c) repeating steps (a)-(b) for a plurality of different 'ruler' lengths in order to obtain a set of summation values representing said input signal; and
(d) processing the summation values obtained at step (c) in order to classify said input signal.

Also according to the present invention, there is provided a system for classifying signals, comprising a mapping stage for

(a) selecting a 'ruler' length and progressively mapping said 'ruler' onto an input signal to be classified, and determining each resulting change in value of said input signal, or the product of each corresponding pair of values of said input signal;
(b) summing the values or products in order to obtain a single summation value representing the input signal at the selected 'ruler' length; and
(c) repeating steps (a)-(b) for a plurality of 'ruler' lengths in order to obtain a set of summation values representative of said input signal:

said system further comprising a classification stage for receiving said set of summation values and arranged to classify the input signal.

Preferably the classification processing uses a neural network, comprising multiple layers consisting of an input layer, one or more hidden layers and an output layer.

Preferably the number of processing elements forming the input layer of the neural network is representative of the number of the summation values which are obtained.

Preferably the number of processing elements forming the output layer of the neural network is representative of the number of classes to which the input signal can belong.

Preferably the data compression ratio resulting from steps (a)-(c) is N:m where N is the number of samples which make up the input signal and m is the number of selected 'ruler' lengths.

Preferably the neural network is adapted for a required application by means of a learning phase.

Preferably the learning phase is a supervised learning phase employing error back-propagation. Preferably the learning phase requires presentation of a plurality of examples of signals and their corresponding output classes to respective network inputs and outputs.

The mapping stage of the system of the present invention reduces the size of the input signal dramatically whilst preserving and enhancing its significant features.

An embodiment of the invention will now be described by way of example only and with reference to the accompanying drawings, in which:

FIGURE 1 is a block diagram of a system in accordance with the present invention;
FIGURE 2a is a simplified representation of a typical input signal;
FIGURE 2b is a simplified representation of a typical output vector produced at the mapping stage of the system;
FIGURE 3a is an example of an input signal for which a system in accordance with the present invention may be used;
FIGURE 3b is the output vector produced by performing a transformation on the signal of Figure 3a; and
FIGURE 4 is a schematic representation of a neural network.

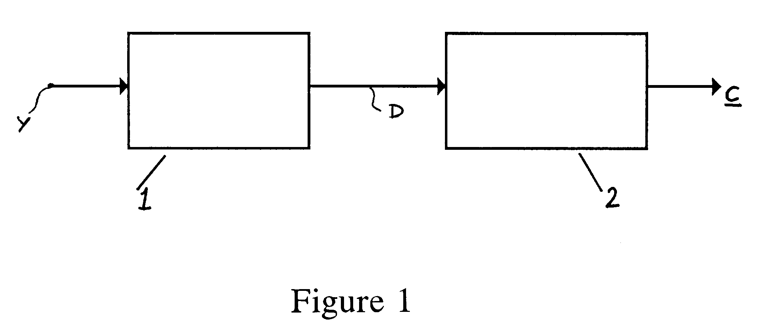

Referring to Figure 1, a system in accordance with the present invention comprises two processing stages. These are the mapping stage 1, which compresses an input signal such that it is in a suitable form for processing, and the learning and recognition stage 2, which processes the compressed signal in order to classify it according to its characteristic features. The operation of the two stages will now be described.

The Mapping Stage

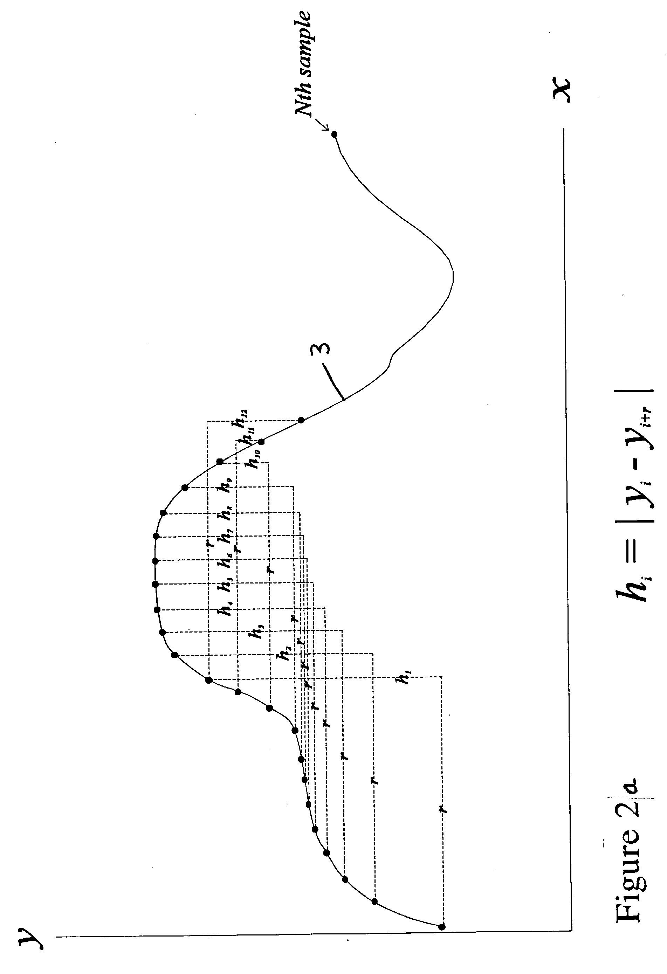

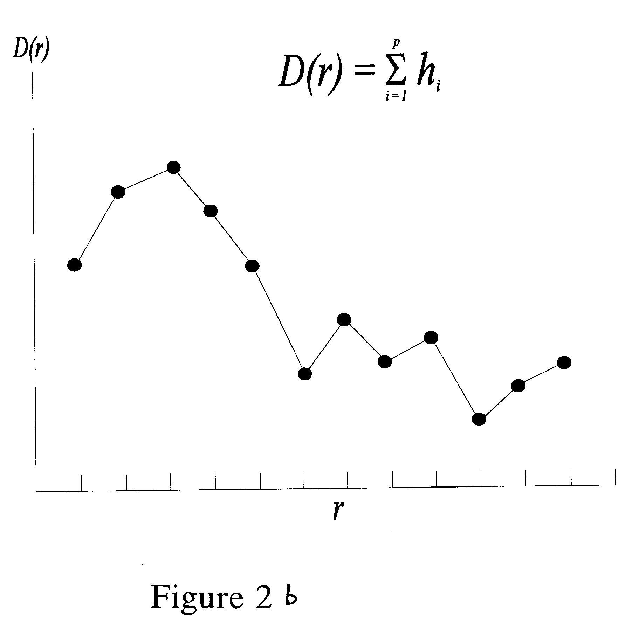

In order to be processed, an input signal must first be sampled, as shown in Figure 2a. This may be carried out in accordance with any known technique and the samples may be either time or frequency samples. The signal may alternatively use several time-frequency distributions. Sampling produces an input vector $\underline{Y}$ of length N, N being dependent on the sampling rate used. The mapping stage 1 performs a mapping of the input vector $\underline{Y}$, which is representative of the original signal, into an output vector $\underline{D}$ of length m. The compression ratio (N:m) is dependent on the application and it can be high: ratios of the order of 25:1 are typical. This process may also be described as mapping an N-dimensional vector $\underline{Y}$ to an m-dimensional vector $\underline{D}$, where N is greater than m.

The mapping operation implements a transformation which compresses an input vector $\underline{Y}$, whilst preserving certain information on frequency, phase and shape, such that a compact signature vector $\underline{D}$ is produced which may be used by the learning and recognition stage 2 for recognition and classification purposes.

Referring to Figure 2a and by way of example, an input signal 3 is sampled N times (in accordance with conventional sampling theory and observing the Nyquist Limit) to produce an input vector $\underline{Y} = y_0, y_1, .., y_{N-1}$. The signal transform is then implemented by first defining a length, $r_1$, herein referred to as a 'ruler' length. The ruler length $r_1$ is then progressively mapped onto the input vector $\underline{Y}$ as shown. Each time the position of the ruler is changed, the magnitude difference h between the y-axis coordinates of the two corresponding sample values is calculated. The result is a set of difference values, the number p of which is dependent both upon the relative sample lengths of the ruler and the input signal, and upon the extent of ruler displacement between successive measurements.

Figures 2a and 2b illustrate the case of a ruler advanced each time by a single sample, in which case the difference values are subsequently summed according to -

$$D_{inc}(r) = \sum_{i=0}^{n} \left| y_i - y_{(i+r)} \right|$$

where

$$n = N - 1 - r$$

in which I(x) returns the integer part of x. This results in a single value $D_1$, which is a representation of the input vector $\underline{Y}$ for ruler length $r_1$.

However, an alternative scheme would be to advance the ruler by one whole ruler length for each calculation, resulting in a subsequent summation given by -

$$D(r) = \sum_{i=0}^{n-1} \left| y_{i.r} - y_{(i+1).r} \right|$$

where

$$n = I\left(\frac{N-1}{r}\right)$$

According to the invention, a second value of the 'ruler' length, $r_2$, is next defined, and the above-described process is repeated. The transformation is complete when m 'ruler' lengths have been defined and, therefore, an output vector $\underline{D}$ of length m has been produced. This vector is representative of the original input vector $\underline{Y}$ but is substantially reduced in complexity and size, as shown in Figure 2b, having preserved and enhanced certain significant features of the original signal 3.

As an alternative to calculating a sum of magnitude differences between respective samples for each ruler length, it may, in some cases, be preferable to calculate a product of magnitude differences, in which case the describing equations become -

$$P_{inc}(r) = \sum_{i=0}^{n} \left| y_i \cdot y_{(i=r)} \right|$$

where

$$n = N - 1 - r$$

and

$$P(r) = \sum_{i=0}^{n-1} \left| y_{i.r} \cdot y_{(i+1).r} \right|$$

where

$$n = I\left(\frac{N-1}{r}\right)$$

for both single-sample ruler displacement and whole-ruler-length displacement schemes respectively.

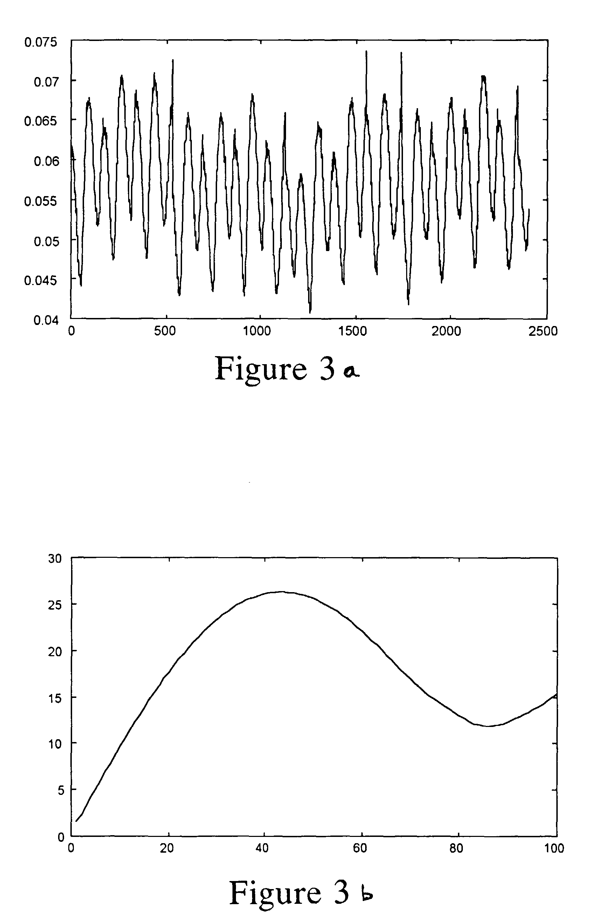

The signals shown in Figures 2a and 2b are simplified representations of the mapping process, presented for the purposes of explanation. However, a more typical signal for which the system is suitable is given in Figure 3a, which illustrates a current signal from a d.c. motor in operation. Such a signal would typically have to be sampled at a very high frequency, so as to retain all of its significant information, and would therefore result in a very large quantity of data. The signal vector might therefore be transformed, by the mapping stage 1 of the system of the present invention, so as to produce a more compressed output vector such as that shown in Figure 3b, which may subsequently be fed into the learning and recognition stage 2 of the system of the present invention for recognition and classification purposes.

The Learning and Recognition Stage

The classification stage 2 of the system shown in Figure 1 preferably consists of a neural network which may be a multi-layer feed-forward structure, a self-organising feature map, a learning vector quantisation network, or any similar neural system known in the art. Classification using a neural network structure involves a learning phase and a recall phase. During the learning phase, the network is trained by presenting it with known signal vectors and their corresponding output classes such that, in the recall phase, it can classify unknown signal vectors into appropriate classes based on its experience during the learning phase. This process will now be described in more detail, using a three-layered, feed-forward network as an example.

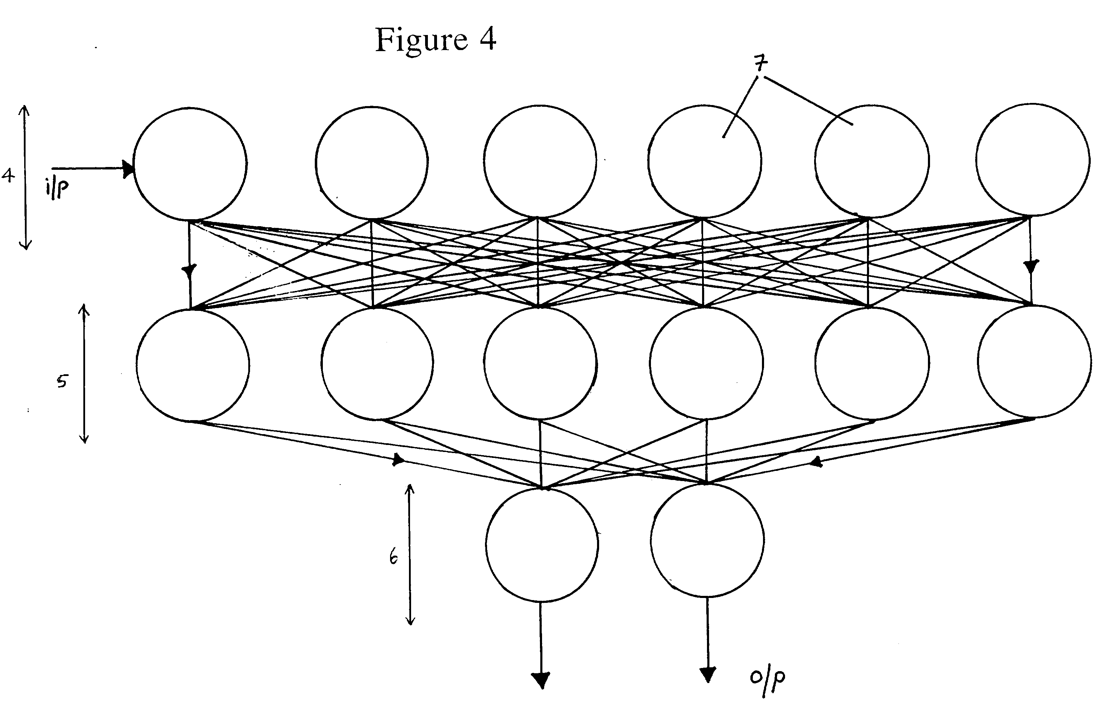

Referring to Figure 4, a typical three-layered neural network comprises an input layer 4, a 'hidden' layer 5 and an output layer 6, each layer comprising a plurality of processing elements or neurons 7, each neuron in a layer being connected to each neuron in its adjacent layer. The input layer 4 corresponds to the output vector $\underline{D}$ (Figure 1) from the mapping stage and, with a compression ratio of N:m, m neurons 7 are necessary to form the input layer. The number of neurons in the output layer 6 corresponds to the number of signal classes required by the application. There is no minimum or maximum limit to the number of outputs which can be included but, in practical terms, it is usually preferable to include at least two in order to simplify the learning phase by providing comparative outputs, and also improve the accuracy of the recall phase operation. The hidden layer 5 is also application-dependent. The more complex the signals to be classified and the more classes required to be recognised, the larger the number of neurons which will be necessary to form the hidden layer 5.

Each of the connections between the neurons is weighted and initially each weight is set to a random value. During the learning phase, the neural network is presented with several known signal vectors and their desired classes. As the vectors are fed forward through the system, they are multiplied by the weights corresponding to the connections between the neurons, before being summed and thresholded at each neuron. A comparison is made between the actual and required network outputs, and the difference fed back up through the system so that the weights of the connections may be modified accordingly. This process is repeated for several different examples until the outputs have reached a predetermined target, indicating that they are sufficiently accurate, i.e. converged, and the learning phase is complete. This process is known as supervised learning using error back-propagation.

During the recall phase, an unknown vector may be fed into the network and the values at the output layer 6 will indicate the class of the signal according to the information which the neural network has obtained from the learning phase.

The present invention is currently implemented using software, however it may also be implemented in hardware using either a micro-programmed or hard-wired approach.

Whilst the present invention has been described with specific reference to recognition and classification of signals obtained from a d.c. motor, the range of applications is in no way limited to this. The present invention is suitable for use in any application where signals are to be classified according to features of their shape. Typically these include classification of medical signals, vibration analysis and speech recognition. The system may simply be trained for the specific application to which it is to be applied.

**Claims**

1. A method of classifying signals, comprising:

(a) selecting a 'ruler' length and progressively mapping said ruler onto an input signal to be classified, and determining each resulting change in value of said input signal, or the product of each corresponding pair of values of said input signal;

(b) summing the values or products obtained at step (a) in order to obtain a single summation value representing the input signal at the selected 'ruler' length;

(c) repeating steps (a)-(b) for a plurality of different 'ruler' lengths in order to obtain a set of summation values representing said input signal; and

(d) processing the summation values obtained at step (c) in order to classify said input signal.

2. A method as claimed in Claim 1, wherein the data compression ratio resulting from steps (a)-(c) is N:m where N is the number of samples which make up the input signal and m is the number of selected 'ruler' lengths.

3. A method as claimed in Claim 1 or Claim 2, wherein said processing step uses a neural network.

4. A method as claimed in Claim 3, wherein the number of processing elements forming the input layer of the neural network is representative of the number of the summation values which are obtained.

5. A method as claimed in Claim 3 or Claim 4, wherein the number of processing elements forming the output layer of the neural network is representative of the number of classes to which the input signal can belong.

6. A method as claimed in any of Claims 3 to 5, wherein the neural network is adapted for a required application by means of a learning phase.

7. A method as claimed in Claim 6, wherein the learning phase is a supervised learning phase employing error back-propagation.

8. A method claimed in Claim 6 or Claim 7, wherein the learning phase requires presentation of a plurality of examples of signals and their corresponding output classes to respective network inputs and outputs.

9. A system for classifying signals, comprising a mapping stage for:

(a) selecting a 'ruler' length and progressively mapping said 'ruler' onto an input signal to be classified, and determining each resulting change in value of said input signal, or the product of each corresponding pair of values of said input signal;
(b) summing the values or products in order to obtain a single summation value representing the input signal at the selected 'ruler' length; and
(c) repeating steps (a)-(b) for a plurality of 'ruler' lengths in order to obtain a set of summation values representative of said input signal:

said system further comprising a classification stage for receiving said set of summation values and arranged to classify the input signal.

10. A system as claimed in Claim 9, arranged such that the data compression ratio resulting from steps (a)-(c) is N:m where N is the number of samples which make up the input signal and m is the number of selected 'ruler' lengths.

11. A system as claimed in Claim 9 or Claim 10, wherein said classification stage comprises a neural network.

12. A system as claimed in Claim 11, wherein the number of processing elements forming the input layer of the neural network is representative of the number of the summation values which are obtained.

13. A system as claimed in Claim 11 or Claim 12, wherein the number of processing elements forming the output layer of the neural network is representative of the number of classes to which the input signal can belong.

Figure 1

Figure 2a

$$h_i = | y_i - y_{i+r} |$$

EP 0 767 439 A2

$$D(r) = \sum_{i=1}^{p} h_i$$

Figure 2 b

Figure 3 a

Figure 3 b

Figure 4